# EUROPEAN PATENT SPECIFICATION

(11) **EP 0 659 864 B1**
(45) Date of publication and mention of the grant of the patent: **13.06.2001**
(21) Application number: 94309507.5
(22) Date of filing: 19.12.1994
(51) Int. Cl.: C09K 11/84, G21K 4/00

(54) **Fluorescent substances, their preparation and use in radiation detectors**
Fluoreszente Materalien, Herstellung derselben und Gebrauch in Strahlungsdetektoren
Substances fluorescentes, leur préparation et utilisation dans des détecteurs de rayonnement

(30) Priority: 27.12.1993 JP 33273393
(43) Date of publication of application: 28.06.1995
(73) Proprietor: KABUSHIKI KAISHA TOSHIBA, Kawasaki-shi, Kanagawa-ken 210-8572 (JP)
(72) Inventor: Yokota, Kazuto, c/o Intellectuel Property Div., Minato-ku, Tokyo (JP); Fukuta, Yukihiro, c/o Intellectuel Property Div., Minato-ku, Tokyo (JP)
(74) Representative: BATCHELLOR, KIRK & CO.

(56) References cited:
- EP-A- 0 533 316
- DATABASE WPI Section Ch, Week 9150 Derwent Publications Ltd., London, GB; Class K08, AN 91-364598 & JP-A-03 243 686 ( TOSHIBA KK) , 30 October 1991
- Extended Abstract of Electrochemical Society Paper, 86, pages 201-203 (1969, Spring)

## Description

This invention is concerned with fluorescent substances based on Pr-activated rare earth oxysulfides, methods for their production radiation detectors which incorporate the fluorescent substance, and an X-ray CT apparatus. More particularly, this invention is directed to Pr-activated rare earth oxysulfide fluorescent substances having highly desirable capacity for light emission, their production, their use in radiation detectors and in X-ray CT apparatus which incorporate such radiation detectors.

Nondestructive inspection of a body under test by means of X-ray CT has been widespread particularly in the medical and industrial fields. In the X-ray CT apparatus employed for this inspection, a detector utilizes a scintillator for detecting radiation transmitted through a given body. The scintillator is a substance which, on being stimulated as by the X-ray, emits a visible radiation or electromagnetic waves of a wavelength approximating that of a visible radiation. Previously known scintillator materials include single crystals such as NaI, CsI, and CdWO₄, ceramics such as BaFClEu, LaOBr:Tb, CsI:T1, CaWO₄, and CdWO₄, the cubic rare earth oxide ceramics disclosed in JP-A-59-27,283, and the rare earth oxysulfide ceramics such as Gd₂O₂S:Pr disclosed in JP-A-58-204,088.

Among materials for the scintillator mentioned above, the rare earth oxysulfide ceramics such as Gd₂O₂S:Pr are attractive because of their high luminous efficiency. However, the sulphide-forming agent which is mixed with a rare earth oxide powder and the alkali metal salt of phosphoric acid which is used as a flux persist in the fluorescent substance and have been found to impede improvement of their light transmission properties.

In an effort to reduce this problem, JP-A-03-243,686, for example, is concerned with modifying a fluorescent substance to retain its desirable sintering property and acquire improved crystallinity and light transmission properties by limiting within specific ranges the amounts of alkali metals and phosphorus which persist.

The fluorescent substance disclosed in JP-A-03-243,686, however, is still deficient in luminous emission intensity and it is desirable to seek still further improvement.

An object of this invention is the provision of fluorescent substances having improved luminous emission intensity compared with a conventional rare earth oxysulfide fluorescent substance and methods for their production.

Another object of this invention is to provide a radiation detector using the fluorescent substance and an X-ray CT apparatus using the radiation detector.

The fluorescent substances of this invention are rare earth oxysulfides represented by the chemical formula, R₂₍₁₋ₓ₎Pr₂ₓO₂S (1) and further characterised by exhibiting a linear absorption coefficient of not more than 6.0 cm⁻¹ at a wavelength of 550 nm as defined in claim 1. In the formula (1), R represents at least one of the following elements: Y, Gd, La, and Lu, and x represents a numerical value defined by the expression 5 x 10⁻⁵ ≤ x ≤ 1 x 10⁻².

As the element R, at least one member selected from the group consisting of Y (yttrium), Gd (gadolinium), La (lanthanum), and Lu (lutetium) can be used. Among the rare earth elements included, Gd especially has been found to exhibit a large X-ray absorption coefficient, hence this element is particularly preferred for use in a radiation detector.

The reason for using Pr as an activating agent in the fluorescent substance is that Praseodymium has been found to have a small afterglow compared with known activating agents as Tb and Eu and, therefore, is also particularly preferred for use in a radiation detector.

The reason for confining the numerical value of x within the range of 5 x 10⁻⁵ ≤ x ≤ 1 x 10⁻² is that the luminous emission intensity has been found to depend on the concentration of Pr and the fluorescent substance is unlikely to exhibit satisfactory luminous emission intensity if the numerical value of x falls outside the range.

This range defining the value of x preferably is 5 x 10⁻⁵ ≤ x ≤ 5 x 10⁻³, and more preferably 1 x 10⁻⁴ ≤ x ≤ 3 x 10⁻³.

The reason for limiting the linear absorption coefficient to that at a wavelength of 550 nm is that the magnitude of the absorption coefficient at this specific wavelength has been found not to be readily affected by the addition of Pr. Some sintered ceramics may be prevented from exhibiting satisfactory luminous emission intensity by its light transmission properties even when the concentration of Pr is confined within the aforementioned range. The reason for imposing an upper limit of 6.0 cm⁻¹ on the linear absorption coefficient at 550 nm is that the fluorescent substance has been found to acquire sufficient luminous emission intensity to adapt it for use in a radiation detector so long as the linear absorption coefficient does not exceed the upper limit.

The linear absorption coefficient at 550 nm is preferably not more than 5.5 cm⁻¹, and more preferably not more than 5.0 cm⁻¹.

The content of PO₄ in the fluorescent substances is not more than 15 ppm.

The present fluorescent substances can be prepared by the following steps:
preparing a powder of a yttrium and/or rare earth oxide having a composition of the chemical formula, R₂O₃ (wherein R is at least one of the following elements:
Y, Gd, La and Lu), and containing Pr, mixing the oxide with S (sulphur), a phosphate represented by the chemical formula, A₃PO₄ to promote sintering, and a carbonate represented by the chemical formula, A₂CO₃ (wherein A represents at least one member selected from the group consisting of Li, Na, K, Rb, and Cs), then firing the resultant mixture at a temperature from 1100°C to 1300°C, washing the fired mixture with acid and water, and thereafter subjecting the washed fired mixture to a hot isostatic pressing at a temperature of not less than 1400°C under a pressure of not less than 100 MPa.

The reason for limiting the content of Pr in the fluorescent substance is that it may not produce a fully satisfactory luminous emission if the Pr content departs from this specific range. The temperature and pressure of the hot isostatic pressing are required to exceed 1400°C and 100 MPa respectively. Preferably these conditions exceed 1450°C and 130 MPa.

Since this method of production first fires the fluorescent substance and then washes the fired fluorescent substance, the PO₄ which helps to induce promoted sintering of the fluorescent substance and remains in the fired fluorescent substance is essentially washed out at the acid washing step and, as a result, the PO₄ content in the fluorescent substance after the treatment of hot isostatic pressing is low. Conversely, if the treatment of hot isostatic pressing precedes the step of washing, the PO₄ remaining in the sinter will not be washed out and, as a result, the amount of PO₄ persisting in the sinter would be much greater.

The acid to be used for the washing is preferably hydrochloric acid. It is particularly desirable to use (water) dilute hydrochloric acid having a concentration from 5 to 20%. The washing with acid is preferably repeated a number of times. For removal of the PO₄ persisting in the fluorescent substance, it is particularly effective to repeat this washing at least 15 times. For the subsequent washing with water after acid washing, it is desirable to use distilled water. Since the washing with water is intended to remove the acid which remains in the fluorescent substance after the acid washing step(s), it generally suffices to effect water washing two or three times.

The fluorescent substance of this invention is preferably in the form of a ceramic.

When the fluorescent substance is a ceramic, it has an advantage in allowing the PO₄ persisting therein to be removed more efficiently by the washing steps.

If the fluorescent substance is in the form of a single crystal, though it may exhibit outstanding characteristic properties for fluorescence, it will be produced only under very difficult conditions. With all the latest techniques, it is difficult to consistently produce rare earth oxysulfide fluorescent substances of the size normally required for a radiation detector.

Moreover, the yttrium and/or rare earth oxysulfide fluorescent substance may optionally further include Ce for suppressing the phenomenon of afterglow. In such embodiments, the desired suppression of afterglow can be achieved by using Ce at a concentration of not less than 10 ppm. The fluorescent substances of this invention, however, can still be of sufficient fluorescent performance irrespective of the presence or absence of Ce.

The radiation detector embodiments are characterized by using at least one fluorescent substance according to the invention. Similarly, the X-ray CT apparatus according to this invention is characterized by using at least one such radiation detector.

The fluorescent substances of this invention, embrace yttrium and/or rare earth oxysulfides of the chemical formula, R₂₍₁₋ₓ₎Pr₂ₓO₂S (wherein x is defined by the expression, 5 x 10⁻⁵ ≤ x ≤ 1 x 10⁻²), and wherein a linear absorption coefficient at a wavelength of 550 nm is not more than 6.0 cm⁻¹. Further, such substances have been found to acquire notably improved luminous emission intensity as compared with the conventional fluorescent substance because the PO₄ content thereof is controlled to an extremely low level. When such fluorescent substances are used in radiation detectors and consequently in an X-ray CT apparatus, unexpected improvements in luminous emission intensity and contrast resolution can be obtained.

In order that the invention may be more easily appreciated and so that embodiments can be readily prepared and constructed by one skilled in the art, preferred embodiments of the invention will now be described by way of non-limiting example only, with reference to the accompanying drawings and wherein:
Fig. 1 shows the relationship between the linear absorption coefficients and the luminous emission intensities demonstrated by a praseodymium-activated gadolinium oxysulfide ceramic (Gd_{1.998}Pr_{0.002}O₂S) at 550 nm, and
Fig. 2 shows the relationship between the PO₄ contents and the luminous emission intensities demonstrated by the same praseodymium-activated gadolinium oxysulfide ceramic identified in Figure 1 (Gd_{1.998}Pr_{0.002}O₂S) also at 550 nm.

### Example 1:

A mixture of 500 g of a powder of gadolinium oxide containing praseodymium (Pr) at a concentration of 0.1 mol% (Gd_{1.998}Pr_{0.002}O₃) with 75 g of sulphur (S), 100 g of sodium phosphate, and 100 g of sodium carbonate was placed in a quartz vessel and fired in an electronic furnace at 1150°C for five hours.

The resultant fired mixture was gradually cooled to room temperature and then washed five times with 1 litre of dilute hydrochloric acid having a concentration of 10%. It was subsequently washed twice with 1 litre of distilled water.

The resultant fluorescent substance which had undergone acid washing and water washing was dried, then moulded with a rubber press, hermetically sealed with a capsule made of tantalum (Ta), and positioned in a hot isostatic pressing device. In the device, the encapsulated fluorescent substance was treated under a pressure of 147 MPa and a temperature of 1500°C for five hours in an inert gas namely Ar gas atmosphere.

A rod-like sample measuring 1.0 x 1.8 x 20.0 mm was cut from the sintered fluorescent substance obtained as described above and tested for characteristic properties. For this test, the sample was rapidly coated with optical grease on a photodiode having a sensitive part 1.0 x 20.0 mm in area, and a reflecting agent was applied to the remaining surfaces of the sample. As a result, the surfaces of the sample except the surface adjoining the diode are shaded so that light emitted from the fluorescent substance impinges exclusively on the photodiode.

As a reference control sample, a sample identical in shape and size with the sample obtained as above was cut from a CdWO₄ single crystal and used for comparison.

Further a rod-like sample measuring 1.0 x 1.8 x 20.0 mm was cut from the same sintered fluorescent substance, and with the surfaces of the sample polished to a specular finish, heat-treated in an atmosphere of N₂ gas at 380°C for ten hours, and then tested for diffusion spectral transmittance at 550 nm in the direction of 1.8 mm. In this case, the linear absorption coefficient was calculated in accordance with the following formulae.${\text{T = I/I}}_{\text{0}} {\text{= (1 - R)}}^{\text{2}} \text{exp(-αt)}$${\text{R = [(n - 1)/(n + 1)]}}^{\text{2}}$ wherein T stands for the diffused spectral transmittance, n for the refractive index of a given sample at 550 nm, t for the thickness (cm) of the sample, and α for the linear absorption coefficient (cm⁻¹).

The gadolinium oxysulfide fluorescent substance obtained in Example 1 was found to have a refractive index n of 2.3 at 550 nm. Thus, R of this sample is found by calculation to be 0.155. Based on the data, T (diffused spectral transmittance) = 0.199 and t (thickness of the sample) = 0.18 cm, the linear absorption coefficient, α, of this sample is found to be 7.1 cm⁻¹.

The PO₄ content in the gadolinium oxysulfide fluorescent substance of Example 1 was 277 ppm.

The luminous emission intensity of the fluorescent substance obtained in Example 1 was found to be 0.91, relative to the luminous emission intensity of the reference standard sample cut out of the CdWO₄ single crystal.

### Examples 2 to 7:

Samples of Examples 2, 3, 4, 5, 6, and 7 were produced by repeating the procedure of Example 1 while changing the number of cycles of acid washing given to a fluorescent substance obtained by firing in the process of Example 1 respectively to 10, 15, 20, 25, 30, and 35 times. The samples were subjected to the same test as mentioned above.

The results of the test are shown together with those of the sample of Example 1 below.

**TABLE 1**

| EXAMPLE No. | Number of cycles of acid washing | Linear absorption coefficient (cm⁻¹) | PO₄ content (ppm) | | Luminous emission intensity |
|---|---|---|---|---|---|
| | | | Before hot isostatic pressing | After hot isostatic pressing | |
| * 1 | 5 | 7.1 | 277 | 263 | 0.91 |
| * 2 | 10 | 6.6 | 187 | 175 | 1.10 |
| * 3 | 15 | 6.0 | 83 | 79 | 1.52 |
| * 4 | 20 | 5.7 | 65 | 63 | 1.65 |
| * 5 | 25 | 5.5 | 41 | 39 | 1.83 |
| * 6 | 30 | 4.9 | 22 | 21 | 2.13 |
| 7 | 35 | 4.3 | 12 | 9 | 2.35 |
| Standard | | | | | 1.00 |

| | | | | | |
|---|---|---|---|---|---|
| Note) "Before hot isostatic pressing" denotes the PO₄ content in the powdered fluorescent substance after the above mentioned washing process. * denotes comparative example | | | | | |

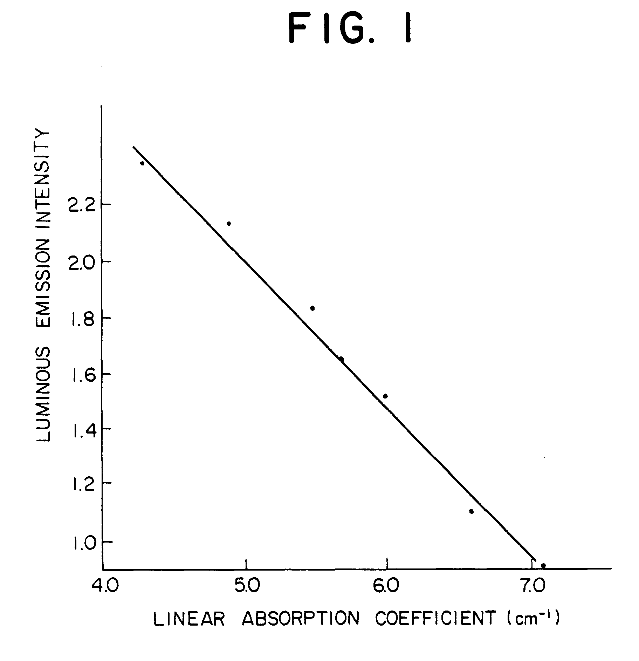

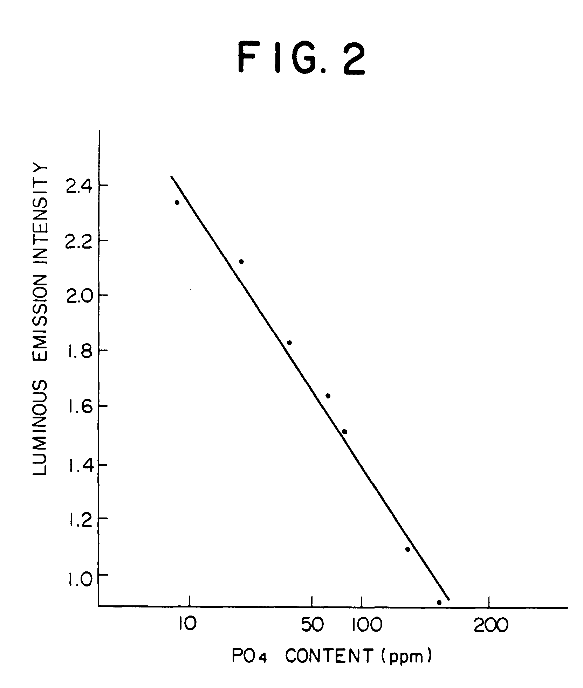

From the data of Table 1 were derived the relationship between the linear absorption coefficient at 550 nm and the luminous emission intensities of each of the gadolinium oxysulfide ceramics (Gd_{1.998}Pr_{0.002}O₂S) obtained in Examples 1 to 7 and the relationship between the PO₄ content and the luminous emission intensities of each of the gadolinium oxysulfide ceramics. These relationships are shown in Fig. 1 and Fig. 2 respectively. It is remarked from Fig. 1 and Fig. 2 that the luminous emission intensities increase substantially linearly with the decrease of the linear absorption coefficient at 550 nm of the gadolinium oxysulfide ceramics and that the luminous emission intensities increase substantially linearly with the decrease of the PO₄ content in the ceramics.

### Examples 8 to 15:

Samples were produced by repeating the procedure of Example 1 while changing the amount of praseodymium respectively to 0.01, 0.03, 0.20, and 0.30 mol% (1 x 10⁻⁴, 3 x 10⁻⁴, 2 x 10⁻³, and 3 x 10⁻³). In Examples 8, 10, 12, and 14, the samples were subjected to 10 cycles of acid washing. In Examples 9, 11, 13, and 15, the samples were subjected to 20 cycles of acid washing. The results are shown in Table 2.

**TABLE 2**

| Example No. | Pr concentration (mol%) | Number of cycles of washing | Linear absorption coefficeient (cm⁻¹) | PO₄ content (ppm) | | Luminous emission intensity |
|---|---|---|---|---|---|---|
| | | | | During firing | After hot isostatic pressing | |
| * 8 | 0.01 | 10 | 6.4 | 137 | 130 | 0.83 |
| * 9 | 0.01 | 20 | 5.5 | 43 | 41 | 1.07 |
| * 10 | 0.03 | 10 | 6.4 | 148 | 139 | 1.12 |
| * 11 | 0.03 | 20 | 5.5 | 46 | 42 | 1.43 |
| * 12 | 0.20 | 10 | 6.5 | 156 | 147 | 1.03 |
| * 13 | 0.20 | 20 | 5.6 | 51 | 47 | 1.35 |
| * 14 | 0.30 | 10 | 6.3 | 126 | 122 | 0.91 |
| * 15 | 0.30 | 20 | 5.4 | 38 | 35 | 1.22 |

| | | | | | | |
|---|---|---|---|---|---|---|
| * denotes comparative example | | | | | | |

### Examples 16 and 17:

Samples were produced by following the procedure of Example 1 while using a powder of yttrium oxide containing praseodymium at a concentration of 0.1 mol% (1 x 10⁻³) (Y_{1.998}Pr_{0.002}O₃) instead. The number of cycles of acid washing was 10 in Example 16 and 20 in Example 17. The results are shown in Table 3.

### Examples 18 and 19:

Samples were produced by following the procedure of Example 1 while using a powder of gadolinium lanthanum lutetium oxide containing praseodymium at a concentration of 0.1 mol% (1 x 10⁻³) (Gd_{1.598}La_{0.20}Lu_{0.20}Pr_{0.002}O₃) instead. The number of cycles of acid washing was 10 in Example 18 and 20 in

### Example 19.

The results are shown additionally in Table 3.

**TABLE 3**

| Example No. | Number of cycles of washing | Linear absorption coefficient (cm⁻¹) | PO₄ content (ppm) | | Luminous emission intensity |
|---|---|---|---|---|---|
| | | | During firing | After hot isostatic pressing | |
| * 16 | 10 | 6.3 | 154 | 146 | 1.31 |
| * 17 | 20 | 5.9 | 45 | 39 | 1.58 |
| * 18 | 10 | 6.5 | 139 | 132 | 1.25 |
| * 19 | 20 | 5.6 | 32 | 27 | 1.73 |

| | | | | | |
|---|---|---|---|---|---|
| * denotes comparative example | | | | | |

### Examples 20 to 22:

Samples were produced by following the procedure of Example 1 while using a powder of gadolinium having part thereof substituted by cerium and containing praseodymium at a concentration of 0.1 mol (1 x 10⁻³) (Gd_{1.99795}Pr_{0.00200}Ce_{0.00005}O₃) instead. The number of cycles of acid washing was 10 in Example 20, 20 in Example 21, and 30 in Example 22.

The results are shown in Table 4.

| Example No. | Number of cycles of washing | TABLE Linear absorption coefficient (cm⁻¹) | 4 PO₄ content (ppm) | | Luminous emission intensity |
|---|---|---|---|---|---|
| | | | During firing | After hot isostatic pressing | |
| * 20 | 10 | 6.5 | 173 | 168 | 0.95 |
| * 21 | 20 | 5.8 | 72 | 65 | 1.45 |
| * 22 | 30 | 5.0 | 25 | 23 | 1.98 |

| | | | | | |
|---|---|---|---|---|---|
| * denotes comparative example | | | | | |

It is remarked from Tables 1 to 4 that the samples containing fluorescent substances having linear absorption coefficients of not more than 6.0 cm⁻¹ at 550 nm possess higher luminous emission intensities than the standard sample (CdWO₄). It is also noted from Table 1 that the samples containing fluorescent substances having Pr contents in a preferred range possessed luminous emission intensities more than 1.5 times the luminous emission intensity of the standard sample. It is further noted that the samples containing fluorescent substances having PO₄ contents of not more than 100 ppm possess higher luminous emission intensities than the luminous emission intensity of the standard sample. The luminous emission intensities were not less than 2.0 times the luminous emission intensity of the standard sample when the PO₄ contents were not more than 15 ppm.

The samples of (Gd_{1.99795}Pr_{0.00200}Ce_{0.00005}O₃) of Examples 20 to 22 containing a minute amount of cerium as a substituent possessed luminous emission intensities equal to the luminous emission intensities of the samples of Examples 1 to 7 containing no cerium as a substituent and exhibited degrees of afterglow roughly one tenth of the degrees exhibited by the samples of Examples 1 to 7 owing to the addition of cerium.

As described above, the yttrium and/or rare earth oxysulfide fluorescent substance which is produced by this invention has a small linear absorption coefficient and, therefore, manifests surprisingly good luminous emission.

Further, this invention permits production of a fluorescent substance possessing surprisingly good luminous emission intensity because it allows a sufficiently low PO₄ content in the luminous substance without significantly affecting crystallinity or sintering properties.

The X-ray CT apparatus which employs at least one radiation detector using at least one fluorescent substance of the present invention confers improved contrast resolution and better operational accuracy because of the significantly and unexpectedly better luminous emission intensity of such fluorescent substances.

## Claims

1. A fluorescent substance comprising a yttrium and/or rare earth oxysulfide represented by the chemical formula, R₂₍₁₋ₓ₎Pr₂ₓO₂S (1); wherein R represents at least one of the following elements:
Y, Gd, La, and Lu; and x is a numerical value defined by the expression: 5 X 10⁻⁵ ≤ x ≤ 1 x 10⁻², the amount of phosphate (PO₄) present being not more than 15 ppm the substance having a linear absorption coefficient of not more than 6.0 cm⁻¹ at 550 nm, said substance being obtainable by the following steps
mixing a powder of a yttrium and/or rare earth oxide represented by the chemical formula, R₂O₃, and containing Pr with sulphur (S), a phosphate represented by the chemical formula, A₃PO₄ to promote sintering, and a carbonate represented by the chemical formula, A₂CO₃, to form a mixture containing a yttrium and/or rare earth oxysulfide composition represented by the chemical formula, R₂₍₁₋ₓ₎Pr₂ₓO₂S,
firing said mixture at a temperature from 1100°C to 1300°C such as to form a fired such oxysulphide substance,
washing said fired substance with acid and optionally subsequently washing with water, drying the fired substance or allowing it to dry, moulding the substance to a desired form, subjecting the washed, dried, and moulded substance to hot isostatic pressing at a temperature of not less than 1400°C under a pressure of not less than 100 MPa so as to form an oxysulfide ceramic,
wherein R represents at least one of the following elements:
Y Gd, La, and Lu;
A represents at least one of the following alkali metal elements:
Li, Na, K, Rb, and Cs, and
x is defined by the expression, 5 x 10⁻⁵ ≤ x ≤ 1 x 10⁻².

2. A fluorescent substance according to claim 1, wherein said linear absorption coefficient at 550 nm is not more than 5.5 cm⁻¹.

3. A fluorescent substance according to claim 1 or 2, wherein said fluorescent substance is a ceramic.

4. A fluorescent substance according to any preceding claim, wherein the numerical value of x satisfies the expression, 1 x 10⁻⁴ ≤ x ≤ 5 x 10⁻³.

5. A fluorescent substance according to any preceding claim, further containing cerium (Ce).

6. A fluorescent substance according to any preceding claim which comprises yttrium in the absence of Gd, La, and Lu or which comprises Gadolinium in the absence of Y, La and Lu.

7. A fluorescent substance according to any one of claims 1 to 5 containing Gd, La and Lu.

8. Use of a substance according to any preceding claim in the construction of a radiation detector.

9. A radiation detector characterized by including at least one fluorescent substance according to any preceding claim.

10. X-ray CT apparatus characterized by including a radiation detector according to claim 9.

11. A method for the production of a fluorescent substance according to any one of claims 1 to 7, characterized by the steps of
mixing a powder of a yttrium and/or rare earth oxide represented by the chemical formula, R₂O₃, and containing Pr with sulphur (S), a phosphate represented by the chemical formula, A₃PO₄ to promote sintering, and a carbonate represented by the chemical formula, A₂CO₃, to form a mixture containing a yttrium and/or rare earth oxysulfide composition represented by the chemical formula, R₂₍₁₋ₓ₎Pr₂ₓO₂S,
firing said mixture at a temperature from 1100°C to 1300°C such as to form a fired such oxysulphide substance,
washing said fired substance with acid and optionally subsequently washing with water, drying the fired substance or allowing it to dry, moulding the substance to a desired form, subjecting the washed, dried, and moulded substance to hot isostatic pressing at a temperature of not less than 1400°C under a pressure of not less than 100 MPa so as to form an oxysulfide ceramic,
wherein R represents at least one of the following elements:
Y Gd, La, and Lu;
A represents at least one of the following alkali metal elements:
Li, Na, K, Rb, and Cs, and
x is defined by the expression, 5 x 10⁻⁵ ≤ x ≤ 1 x 10⁻².

12. A method according to claim 11, wherein said washing with acid is implemented by use of dilute hydrochloric acid having a concentration of 5 to 20%.

13. A method according to any one of claim 11 or 12, wherein said washing with acid is effected for a total of not less than 15 times.

## Patentansprüche

1. Eine fluoreszierende Substanz umfassend ein Yttrium- und/oder seltene Erden-Oxysulfid, dargestellt durch die chemische Formel,
R₂₍₁₋ₓ₎PR₂ₓ O₂S (1); worin R wenigstens eines der nachfolgenden Elemente repräsentiert:
Y, Gd, La und Lu; und x ein numerischer Wert ist, definiert durch den Ausdruck:
5 X 10⁻⁵ ≤ x ≤ 1 x 10⁻², wobei der Anteil an vorhandenem Phosphat (PO₄) nicht mehr als 15 ppm beträgt, wobei die Substanz einen linearen Absorbtionsquofizient von nicht mehr als 6,0 cm⁻¹ bei 550 nm aufweist, wobei die Substanz durch die folgenden Schritte erhalten werden kann,
Mischen eines Pulvers aus einem Yttrium- und/oder seltene Erden-Oxyd, dargestellt durch die chemische Formel, R₂O₃, und enthaltend Pr mit Schwefel (S), ein Phosphat, dargestellt durch die chemische Formel, A₃PO₄, zur Beschleunigung des Sinterns und ein Carbonat, dargestellt durch die chemische Formel, A₂CO₃, um ein Gemisch zu bilden, enthaltend eine Yttrium- und/oder seltene Erden-Oxysulfid-Zusammensetzung, dargestellt durch die chemische Formel, R₂₍₁₋ₓ₎Pr₂ₓO₂S,
Brennen des Gemisches bei einer Temperatur von 1100° C bis 1300° C, um so eine gebrannte Oxysulfidsubstanz zu bilden,
Waschen der gebrannten Substanz mit Säure und optional nachfolgendem Waschen mit Wasser, Trocknen der gebrannten Substanz oder Erlauben Ihr zu trocknen, Formen der Substanz in eine gewünschte Form, unterwerfen der gewaschenen, getrockneten und geformten Substanz einer isostatischen Pressung bei einer Temperatur von nicht weniger als 1400° C bei einem Druck von nicht weniger als 100 MPa, um so eine oxysulfidische Keramik zu formen,
worin R wenigstens eines der folgenden Elemente darstellt:
Y, Gd, La und Lu;
A wenigstens eines der folgenden Alkalimetallelemente darstellt:
Li, Na, K, Rb und Cs, und
x durch den Ausdruck definiert ist: 5 x 10⁻⁵ ≤ x ≤ 1 x 10⁻².

2. Eine fluoreszierende Substanz nach Anspruch 1, worin der lineare Absorbtionskoeffizient bei 550 nm nicht mehr als 5,5 cm⁻¹ beträgt.

3. Eine fluoreszierende Substanz nach Anspruch 1 oder 2, worin die fluoreszierende Substanz eine Keramik ist.

4. Eine fluoreszierende Substanz nach einem der vorhergehenden Ansprüche, worin der numerische Wert von x den Ausdruck, 1 x 10⁻⁴ ≤ x ≤ 5 x 10⁻³, erfüllt.

5. Eine fluoreszierende Substanz nach einem der vorhergehenden Ansprüche, weiterhin enthaltend Cer (Ce).

6. Eine fluoreszierende Substanz nach einem der vorhergehenden Ansprüche, welche Yttrium enthält, in der Abwesenheit von Gd, La und Lu oder welches Gadolinium enthält, in der Abwesenheit von Y, La und Lu.

7. Eine fluoreszierende Substanz nach einem der Ansprüche 1 bis 5, enthaltend Gd, La und Lu.

8. Verwendung einer Substanz nach einem der vorhergehenden Ansprüche bei der Konstruktion eines Strahlendetektors.

9. Ein Strahlendetektor, dadurch gekennzeichnet, daß er wenigstens eine fluoreszierende Substanz nach einem der vorhergehenden Ansprüche umfaßt.

10. Ein Röntgencomputertomographiegerät, dadurch gekennzeichnet, daß es einen Strahlendetektor nach Anspruch 9 enthält.

11. Ein Verfahren zur Herstellung einer fluoreszierenden Substanz nach einem der Ansprüche 1 bis 7, gekennzeichnet durch die Schritte,
Mischen eines Pulvers aus einem Yttrium- und/oder seltene Erden-Oxyd, dargestellt durch die chemische Formel, R₂O₃, und enthaltend Pr mit Schwefel (S), ein Phosphat, dargestellt durch die chemische Formel, A₃PO₄, zur Beschleunigung des Sinterns und ein Carbonat, dargestellt durch die chemische Formel, A₂CO₃, um ein Gemisch zu bilden, enthaltend ein Yttrium- und/oder seltene Erden-Oxysulfid-Zusammensetzung, dargestellt durch die chemische Formel, R₂₍₁₋ₓ₎Pr₂ₓO₂S,
Brennen des Gemisches bei einer Temperatur von 1100° C bis 1300° C, um so eine gebrannte Oxysulfidsubstanz zu bilden,
Waschen der gebrannten Substanz mit Säure und optional nachfolgendem Waschen mit Wasser, Trocknen der gebrannten Substanz oder Erlauben Ihr zu trocknen, Formen der Substanz in eine gewünschte Form, unterwerfen der gewaschenen, getrockneten und geformten Substanz einer isostatischen Pressung bei einer Temperatur von nicht weniger als 1400° C bei einem Druck von nicht weniger als 100 MPa, um so eine oxysulfidische Keramik zu formen,
worin R wenigstens eines der folgenden Elemente darstellt:
Y, Gd, La und Lu;
A wenigstens eines der folgenden Alkalimetallelemente darstellt:
Li, Na, K, Rb und Cs, und
x durch den Ausdruck definiert ist: 5 x 10⁻⁵ ≤ x ≤ 1 x 10⁻².

12. Ein Verfahren nach Anspruch 11, worin das Waschen mit Säure durchgeführt wird, durch die Verwendung von verdünnter Salzsäure mit einer Konzentration von 5 bis 20 %.

13. Ein Verfahren nach einem der Ansprüche 11 oder 12, worin das Waschen mit Säure mit einem Gesamt von nicht weniger als 15 Mal bewirkt wird.

## Revendications

1. Substance fluorescente comprenant un oxysulfure d'yttrium et/ou de terre rare représenté par la formule chimique R₂₍₁₋ₓ₎Pr₂ₓO₂S (1), dans laquelle R représente au moins un des éléments suivants :
Y, Gd, La, et Lu ; et x est une valeur numérique définie par l'expression : 5 x 10⁻⁵ ≤ x < 1 x 10⁻², la quantité de phosphate (PD₄) présente n'excédant pas 15 ppm, la substance ayant un coefficient d'absorption linéaire n'excédant pas 6,0 cm⁻¹ à 550 nm, ladite substance pouvant être obtenue par les étapes consistant à mélanger une poudre d'un oxyde d'yttrium et/ou d'une terre rare représenté par la formule chimique, R₂O₃, et contenant du Pr avec du soufre (S), un phosphate représenté par la formule chimique, A₃PO₄ pour favoriser le frittage, et un carbonate représenté par la formule chimique, A₂CO₃, de manière à former un mélange contenant une composition d'oxysulfure d'yttrium et/ou de terre rare représentée par la formule chimique, R₂₍₁₋ₓ₎ Pr₂ₓO₂S ; cuire ledit mélange à une température de 1100 à 1300°C de manière à former une substance d'oxysulfure cuite ; laver ladite substance cuite avec un acide, et éventuellement, la laver par la suite avec de l'eau ; sécher la substance cuite ou la laisser sécher ; mouler la substance selon une forme souhaitée ; soumettre la substance lavée, séchée, et moulée à une compression isotactique à chaud à une température non inférieure à 1400°C sous une pression non inférieure à 100 MPa de manière à former une céramique d'oxysulfure,
dans laquelle R représente au moins un des éléments suivants :
Y, Gd, La, et Lu ;
A représente au moins un des éléments de métal alcalin suivants :
Li, Na, K, Rb, et Cs, et
x est défini par l'expression 5x10⁻⁵ ≤ x ≤ 1x10⁻².

2. Substance fluorescente selon la revendication 1, dans laquelle ledit coefficient d'absorption linéaire à 550 nm n'excède pas 5,5 cm⁻¹.

3. Substance fluorescente selon la revendication 1 ou 2, dans laquelle ladite substance fluorescente est une céramique.

4. Substance fluorescente selon l'une quelconque des revendications précédentes, dans laquelle la valeur numérique de x satisfait l'expression 1x10⁻⁴ ≤ x ≤ 5x10⁻³.

5. Substance fluorescente selon l'une quelconque des revendications précédentes contenant, en outre, du cérium (Ce).

6. Substance fluorescente selon l'une quelconque des revendications précédentes qui comprend de l'yttrium en l'absence de Gd, La, et Lu ou qui comprend du gadolinium en l'absence de Y, La et Lu.

7. Substance fluorescente selon l'une quelconque des revendications 1 à 5 contenant Gd, La et Lu.

8. Utilisation d'une substance selon l'une quelconque des revendications précédentes dans la construction d'un détecteur de rayonnement.

9. Détecteur de rayonnement caractérisé par l'incorporation d'au moins une substance fluorescente selon l'une quelconque des revendications précédentes.

10. Appareil CT à rayons X caractérisé par l'incorporation d'un détecteur de rayonnement selon la revendication 9.

11. Procédé de préparation d'une substance fluorescente selon l'une quelconque des revendications 1 à 7 caractérisé par les étapes consistant à
mélanger une poudre d'un oxyde d'yttrium et/ou d'une terre rare représenté par la formule chimique, R₂O₃, et contenant du Pr avec du soufre (S), un phosphate représenté par la formule chimique, A₃PO₄ pour favoriser le frittage, et un carbonate représenté par la formule chimique, A₂CO₃, de manière à former un mélange contenant une composition d'oxysulfure d'yttrium et/ou de terre rare représentée par la formule chimique, R₂₍₁₋ₓ₎Pr₂ₓO₂S,
cuire ledit mélange à une température de 1100 à 1300°C de manière à former une substance d'oxysulfure cuite,
laver ladite substance cuite avec un acide, et éventuellement, la laver par la suite avec de l'eau, sécher la substance cuite ou la laisser sécher, mouler la substance selon une forme souhaitée, soumettre la substance lavée, séchée, et moulée à une compression isotactique à chaud à une température non inférieure à 1400°C sous une pression non inférieure à 100 MPa de manière à former une céramique d'oxysulfure,
dans laquelle R représente au moins un des éléments suivants :
Y, Gd, La, et Lu ;
A représente au moins un des éléments de métal alcalin suivants :
Li, Na, K, Rb, et Cs, et
x est défini par l'expression 5x10⁻⁵ ≤ x ≤ 1x10⁻².

12. Procédé selon la revendication 11, dans lequel ledit lavage avec un acide est mis en oeuvre en utilisant de l'acide chlorhydrique dilué à une concentration de 5 à 20 %.

13. Procédé selon l'une quelconque des revendications 11 ou 12, dans lequel ledit lavage avec un acide est effectué au total pas moins de 15 fois.
